# EUROPEAN PATENT APPLICATION

(11) **EP 4 108 394 A1**
(43) Date of publication of application: **28.12.2022**
(21) Application number: 22769070.8
(22) Date of filing: 25.04.2022
(51) Int. Cl.: B25J 13/08, B25J 9/16, B25J 11/00, A47J 31/44, A47J 31/06

(54) **MATERIAL EXTRACTION DEVICE AND METHOD**

(30) Priority: 06.05.2021 KR 20210058582
(71) Applicant: Vision Semicon Co., Ltd., Daejeon 34026 (KR)
(72) Inventor: YOON, Soo Jung, Sejong 30064 (KR)
(74) Representative: RGTH
(86) International application number: PCT/KR2022/005882
(87) International publication number: WO 2022/234994

(57) **Abstract**

Provided is an ingredient extraction device which measures weight information of an ingredient extracted by a gripper, determines ratio information between a plurality of ingredients on the basis of order information on an order ordered by a customer using a server, controls the gripper to extract the plurality of ingredients in a preset order, and calculates extraction weight information of an ingredient to be extracted later from one or more pieces of weight information of an ingredient extracted in a previous turn on the basis of the ratio information.

## Description

### CROSS-REFERENCE TO RELATED APPLICATION

This application is a continuation-in-part of international application number PCT/KR2022/005882 filed on April 25, 2022, and claims priority to Korean Patent Application No. 10-2021-0058582 filed on May 6, 2021, the disclosures of which are incorporated herein by reference in their entirety.

### BACKGROUND

### 1. Field of the Invention

The present invention relates to an ingredient extraction device and an ingredient extraction method, and more specifically, to an ingredient extraction device which extracts ingredients according to a preset ratio and an ingredient extraction method using the same.

### 2. Discussion of Related Art

In modern times, interest in unmanned services is increasing to provide products or services that consumers want regardless of locations and time. In this regard, cafes that sell coffee in an automated manner using conventional vending machines are emerging, and in such cafes, customers directly select drinks and extract the prepared drinks using machines such as vending machines.

However, in the case of an espresso shot or milk of a coffee machine, it is generally difficult to adjust mixing amounts thereof, and accordingly, even when the same drinks are prepared, since an error in the amount of espresso shot or milk occurs, a ratio between ingredients mixed in a drink varies. In this case, inconsistency in taste of the ordered drink can be a major disadvantage when the same drink is ordered.

Accordingly, a method of maintaining a ratio between ingredients mixed in a drink is required.

### SUMMARY OF THE INVENTION

The present invention is directed to providing an ingredient extraction device which extracts a plurality of ingredients so that a ratio of ingredients mixed in a drink is maintained, and an ingredient extraction method.

According to an aspect of the present invention, there is provided an ingredient extraction device, which controls a gripper provided to extract an ingredient, the ingredient extraction device including a sensor unit which is attached to the gripper and measures weight information of an ingredient extracted by the gripper, a communication unit which receives order information on an order ordered by a customer from a server, a ratio determination unit which determines a plurality of ingredients required according to the order information and determines ratio information between the plurality of ingredients on the basis of the order information, a gripper control unit which controls the gripper to extract the plurality of ingredients in a preset order according to the order information, and a weight setting unit which obtains weight information of one or more ingredients extracted in previous turns, determines an ingredient to be extracted later on the basis of the order according to the order information, and calculates extraction weight information of the ingredient to be extracted from the weight information obtained on the basis of the ratio information.

When two or more ingredients are completely extracted and two or more pieces of weight information are measured, the weight setting unit may generate two or more pieces of individual extraction weight information by calculating extraction weight information of the ingredient to be extracted according to the two or more pieces of weight information measured in previous turns, and set the extraction weight information by calculating an average value of the two or more pieces of individual extraction weight information.

When weight factors are set for the plurality of ingredients, the weight setting unit may set the extraction weight information by applying the weight factors to the two or more pieces of individual extraction weight information.

When there are one or more ingredients to be extracted in turns later than that of one ingredient to be immediately extracted in an order according to the order information, the weight setting unit may generate one or more pieces of estimated extraction weight information by calculating extraction weight information of the one or more ingredients to be extracted in the later turns from one or more pieces of weight information measured in previous turns, further generate individual extraction weight information of the one ingredient to be immediately extracted from the one or more pieces of estimated extraction weight information, and set the extraction weight information by calculating an average value of the plurality of pieces of individual extraction weight information.

When there is any one ingredient among the one or more ingredients to be extracted in the later turns, the weight setting unit may generate the estimated extraction weight information by calculating one or more pieces of individual extraction weight information for the any one ingredient to be extracted in the later turn according to the one or more pieces of weight information measured in the previous turn and calculating an average value of the one or more pieces of individual extraction weight information for the any one ingredient.

When weight factors are set for the plurality of ingredients, the weight setting unit may set the extraction weight information by applying the weight factors to the plurality of pieces of individual extraction weight information.

According to another aspect of the present invention, there is provided an ingredient extraction method of an ingredient extraction device, which controls a gripper provided to extract an ingredient, the ingredient extraction method including receiving, by a communication unit, order information on an order ordered by a customer from a server, determining, by a ratio determination unit, a plurality of ingredients required according to the order information and determining ratio information between the plurality of ingredients on the basis of the order information, controlling, by a gripper control unit, the gripper to extract any one ingredient in a preset order according to the order information, measuring, by a sensor unit attached to the gripper, weight information of the ingredient extracted by the gripper, obtaining, by a weight setting unit, weight information of one or more ingredients extracted in previous turns, determining an ingredient to be extracted later on the basis of the order information, and calculating extraction weight information of the ingredient to be extracted from the weight information obtained on the basis of the ratio information, and controlling, by the gripper control unit, the gripper to extract the ingredient in the order on the basis of the extraction weight information.

The calculating of the extraction weight information of the ingredient to be extracted may include, when two or more ingredients are completely extracted and two or more pieces of weight information are measured, generating two or more pieces of individual extraction weight information by calculating extraction weight information of the ingredient to be extracted according to two or more pieces of weight information measured in previous turns, and setting the extraction weight information by calculating an average value of the two or more pieces of individual extraction weight information.

The calculating of the extraction weight information of the ingredient to be extracted may include, when weight factors are set for the plurality of ingredients, setting the extraction weight information by applying the weight factors to the two or more pieces of the individual extraction weight information.

The calculating of the extraction weight information of the ingredient to be extracted may include, when there are one or more ingredients to be extracted in turns later than that of one ingredient to be immediately extracted in an order according to the order information, generating one or more pieces of estimated extraction weight information by calculating extraction weight information of the one or more ingredients to be extracted in the later turns from one or more pieces of weight information measured in previous turns, further generating individual extraction weight information of the one ingredient to be immediately extracted from the one or more pieces of estimated extraction weight information, and setting the extraction weight information by calculating an average of the pieces of individual extraction weight information.

The calculating of the extraction weight information of the ingredient to be extracted may include, when there is any one ingredient among the one or more ingredients to be extracted in the later turns, generating the estimated extraction weight information by calculating one or more pieces of individual extraction weight information for the any one ingredient to be extracted in the later turn according to the one or more pieces of weight information measured in the previous turns and calculating an average value of one or more pieces of individual extraction weight information for the any one ingredient.

The calculating of the extraction weight information of the ingredient to be extracted may include, when weight factors are set for the plurality of ingredients, setting the extraction weight information by applying the weight factors to a plurality of pieces of individual extraction weight information.

### BRIEF DESCRIPTION OF THE DRAWINGS

Not only detailed descriptions of exemplary embodiments of the present invention described below but also the summary described above will be understood more easily when read with reference to the accompanying drawings. The exemplary embodiments are illustrated in the drawings to illustrate the present invention. However, it should be understood that the present invention is not limited to the exact layout and method illustrated in the drawings, in which:
FIG. 1 is a schematic view illustrating an ingredient extraction system including an ingredient extraction device according to one embodiment of the present invention;
FIG. 2 is a control block diagram illustrating the ingredient extraction device according to one embodiment of the present invention;
FIG. 3 is a block diagram illustrating a process in which a ratio determination unit of FIG. 2 determines ratio information;
FIG. 4 is a block diagram illustrating a process in which a weight setting unit of FIG. 2 sets extraction weight information;
FIG. 5 is a block diagram illustrating a process in which a gripper control unit of FIG. 2 controls a gripper; and
FIG. 6 is a flowchart of an ingredient extraction method according to one embodiment of the present invention.

### DETAILED DESCRIPTION OF EXEMPLARY EMBODIMENTS

The present invention will be described in detail with reference to the accompanying drawings illustrating examples of specific embodiments of the invention. These embodiments will be described in detail so that the invention can be performed by those skilled in the art. It should be understood that various embodiments of the invention are different but are not necessarily mutually exclusive. For example, specific shapes, structures, and characteristics of the embodiments described herein may be implemented in other embodiments without departing from the scope and spirit of the present invention. In addition, it should be understood that a position or arrangement of each component in each disclosed embodiment may be changed without departing from the scope and spirit of the invention. Accordingly, there is no intent to limit the present invention to detailed descriptions to be described below. The scope of the invention is defined by the appended claims and encompasses all equivalents that fall within the scope of the appended claims. Like numbers refer to the same or like functions throughout the descriptions of the drawings.

The term "unit" is defined herein as having its broadest definition to ordinary skill in the art to refer to software including instructions executable in a non-transitory computer-readable medium that would perform the associated function when executed, a circuit designed to perform the associated function, hardware designed to perform the associated function, or a combination of software, a circuit, or hardware designed to perform the associated function.

Further, it is to be understood that all detailed descriptions mentioning specific embodiments of the present disclosure as well as principles, aspects, and embodiments of the present disclosure are intended to include structural and functional equivalences thereof. Further, it is to be understood that these equivalences include an equivalence that will be developed in the future as well as an equivalence that is currently well-known, that is, all elements invented so as to perform the same function regardless of a structure.

Therefore, it is to be understood that, for example, block diagrams of the present specification illustrate a conceptual aspect of an illustrative circuit for embodying a principle of the present disclosure. Therefore, it is to be understood that all flow charts, state transition diagrams, pseudo-codes, and the like, illustrate various processes that may be tangibly embodied in a computer-readable medium and that are executed by computers or processors regardless of whether or not the computers or the processors are clearly illustrated.

Functions of various elements including processors or functional blocks represented as concepts similar to the processors and illustrated in the accompanying drawings may be provided using hardware having capability to execute software in connection with appropriate software as well as dedicated hardware. When the functions are provided by the processors, they may be provided by a single dedicated processor, a single shared processor, or a plurality of individual processors, and some of them may be shared with each other.

In addition, the explicit use of terms presented as the processor, control, or similar concepts should not be interpreted exclusively by quoting hardware capable of executing software, but should be understood to implicitly include, without limitation, digital signal processor (DSP) hardware, a ROM for storing software, a RAM, and a non-volatile memory. The above-mentioned terms may also include well-known other hardware.

In the claims of the present specification, components represented as means for performing functions mentioned in a detailed description are intended to include all methods for performing functions including all types of software including, for example, a combination of circuit devices performing these functions, firmware/micro codes, or the like, and are coupled to appropriate circuits for executing the software so as to execute these functions. It is to be understood that since functions provided by variously mentioned means are combined with each other and are combined with a method demanded by the claims in the present disclosure defined by the claims, any means capable of providing these functions are equivalent to means recognized from the present specification.

Hereinafter, exemplary embodiments of the present invention will be described in more detail with reference to the accompanying drawings.

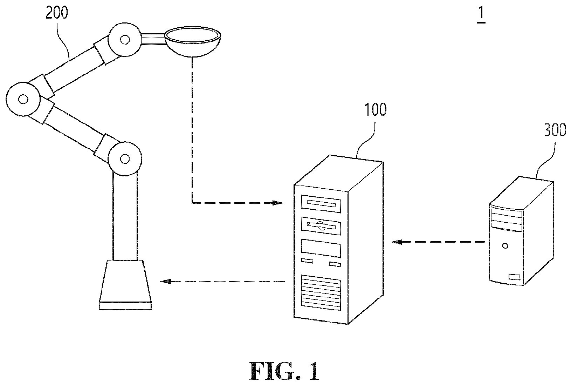

FIG. 1 is a schematic view illustrating an ingredient extraction system including an ingredient extraction device according to one embodiment of the present invention.

The ingredient extraction system 1 may be provided to prepare and provide a drink according to an order of a customer. In this case, the drink may be understood as being prepared by mixing a plurality of ingredients, and examples include coffee, latte, Frappuccino, etc.

Accordingly, the ingredients may be understood as being required to prepare a drink and include, for example, espresso, sparkling water, milk, soy milk, syrup, etc.

In this case, the ingredient extraction system 1 may include a server 300 which generates order information according to an order input by a customer.

In this case, the server 300 may be understood as being connected to a kiosk or the like, which receives the order from the customer and is connected through a network, and accordingly, the server 300 may receive information from the kiosk and generate the order information.

In addition, a plurality of menu information may be stored in the server 300 in advance, and accordingly, the server 300 may obtain menu information matching the order input by the customer and generate the order information from the menu information.

In this case, the order information may include information of the number of drinks ordered by the customer, kinds of ingredients to be mixed in the drinks, amounts of the ingredients to be mixed in the drinks, orders in which the ingredients are mixed to prepare the drinks, and ratios between the ingredients mixed in the drinks.

In addition, the order information may also further include information required for the order such as positions, seats, order prices, and the like of the customer on the basis of information input by the customer.

Meanwhile, a gripper 200 configured to extract ingredients may be provided in the ingredient extraction system 1. In this case, the ingredient extraction system 1 may control the gripper 200 so that an ingredient extraction device 100 extracts the ingredients.

In this case, the gripper 200 may be provided in one of various shapes such as tongs, a scoop, or a ladle. For example, when the gripper 200 is provided in the shape of tongs, the gripper 200 can grip a cup provided to subdivide ingredients. Accordingly, the gripper 200 may be provided to grip a cup in which an ingredient is subdivided or to grip a cup to subdivide an ingredient.

Meanwhile, a sensor unit for measuring weight information of the extracted ingredient may be installed in the gripper 200. In this case, a loadcell, a scale, a pressure sensor, or the like may be used as the sensor unit. Accordingly, a sensor unit 110 may measure the weight information of the ingredient extracted by the gripper 200.

In this case, the loadcell may be understood as being provided to output an electrical signal proportional to a weight. In this case, the loadcell may generate an electrical signal using a torsion gauge, and in this case, the loadcell may be provided so that an elastic member changes according to a weight. Accordingly, the loadcell may be provided to generate the electrical signal having a magnitude proportional to a weight by inducing a change in resistance of the torsion gauge.

As described above, the sensor unit may measure the weight information of the ingredient extracted by the gripper 200, and accordingly, the ingredient extraction device 100 may control the gripper 200 to extract ingredients according to the measured weight information and the order information.

Hereinafter, the ingredient extraction device according to one embodiment of the present invention will be described in detail.

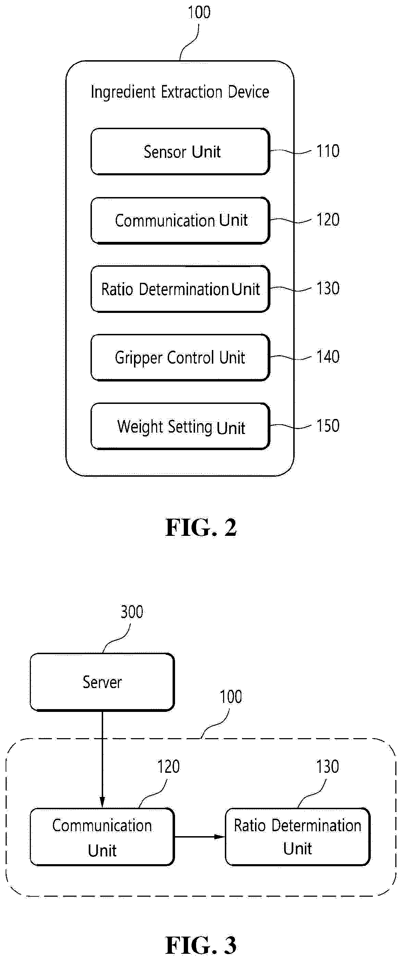

FIG. 2 is a control block diagram illustrating the ingredient extraction device according to one embodiment of the present invention.

The ingredient extraction device 100 may include the sensor unit 110, a communication unit 120, a ratio determination unit 130, a gripper control unit 140, and a weight setting unit 150.

In addition, the ingredient extraction device 100 may be implemented using components of which the number is greater or smaller than the number of components illustrated in FIG. 2. Alternatively, in the ingredient extraction device 100, at least two components provided in the ingredient extraction device 100 may be combined as one component, and the one component may serve a complex function. Hereinafter, the above-described components will be described specifically.

The sensor unit 110 may be connected to the gripper 200 and measure weight information of an ingredient extracted by the gripper 200.

In this case, the sensor unit 110 may transmit the measured weight information to the weight setting unit 150 in a wireless or wired manner.

The communication unit 120 may receive order information on an order ordered by the customer from the server 300.

The ratio determination unit 130 may determine a plurality of ingredients required according to the order information, and the ratio determination unit 130 may determine ratio information between the plurality of ingredients on the basis of the order information.

In this case, the ratio information may be set so that any one ingredient of the plurality of ingredients extracted according to the order information is set as a reference ingredient and ratios of the other ingredients to the reference ingredient are indicated.

Accordingly, the ratio information may indicate ratios between the ingredients other than the reference ingredient on the basis of the ratios of the other ingredients to the reference ingredient.

To this end, a storage unit (not shown) may store information of a plurality of ingredients matching a drink in order information, and in this case, the storage unit (not shown) may store ratio information including ratios between the plurality of ingredients matching the drink.

Accordingly, the ratio determination unit 130 may extract the plurality of ingredients matching the order information, and the ratio determination unit 130 may determine ratio information between the plurality of extracted ingredients.

In this case, the order information may further include information of an ingredient additionally added to the drink ordered by the customer and an additional amount of the corresponding ingredient, and in this case, the ratio determination unit 130 may be set so that the additional amount of the ingredient according to the order information is applied to the ratio information.

For example, when order information includes americano, the ratio determination unit 130 may extract espresso and water as ingredients, and the ratio determination unit 130 may determine, for example, 150 mL water per 60 mL espresso as ratio information.

In this case, when the order information indicates that one shot of espresso is added to the americano, the ratio determination unit 130 may extract the espresso and water as ingredients, and the ratio determination unit 130 may determine 120 mL water per 90 mL espresso as ratio information. In this regard, the espresso may be understood as a reference ingredient for the americano.

As described above, the ratio determination unit 130 may determine a plurality of ingredients and ratio information between the plurality of ingredients according to order information on the basis of information stored in advance.

The gripper control unit 140 may control the gripper 200 to extract a plurality of ingredients in a preset order according to order information.

In this case, the preset order may be an order in which the plurality of ingredients determined by the ratio determination unit 130 are mixed for a drink or extracted by the gripper 200. To this end, the preset order may be set according to importance of the plurality of ingredients determined by the ratio determination unit 130 or set as a preset order according to the order information.

For example, when order information includes americano, a preset order may be set as an order of espresso and water. In addition, when order information includes latte, a preset order may be set as an order of espresso, milk, and syrup.

Accordingly, the gripper control unit 140 may control the gripper 200 to move to a set position for any ingredient to be immediately extracted in an order, and the gripper control unit 140 may control the gripper 200 to extract ingredients according to preset extraction weight information for the corresponding ingredients.

In this case, the extraction weight information may be information set by the weight setting unit 150, and the extraction weight information may be weight information set to extract any ingredient according to order information.

In this case, when the weight information of the extracted ingredients satisfies an error range preset for the extraction weight information, the gripper control unit 140 may control the gripper 200 to move to a preset position to mix the extracted ingredient.

Accordingly, the gripper control unit 140 may perform control such that the extracted ingredient is mixed with an ingredient extracted in advance at the preset position, and the gripper control unit 140 may control the gripper 200 to move to a position of any ingredient to be extracted in a next turn in the order of the order information.

The weight setting unit 150 may obtain weight information of one or more ingredients extracted in previous turns, the weight setting unit 150 may determine ingredients to be extracted in next turns on the basis of an order of order information, and the weight setting unit 150 may calculate extraction weight information of the ingredients to be extracted from the obtained weight information on the basis of ratio information.

In this case, the ingredients extracted in the previous turns may be ingredients already extracted in the order by the gripper 200 according to a preset order set to prepare any one drink according to order information.

In other words, based on a turn of an ingredient to be immediately extracted at an arbitrary timepoint, the term "previous turn" may be a turn of an ingredient extracted earlier than the corresponding ingredient.

For example, when order information includes americano, and weight information of espresso extracted in a previous turn is measured as 50 g, the weight setting unit 150 may set extraction weight information of water to 125 g according to ratio information indicating a ratio of 60 to 150.

Meanwhile, when two or more ingredients are completely extracted, and two or more weight information are measured, the weight setting unit 150 may generate two or more individual extraction weight information by calculating extraction weight information of an ingredient to be extracted according to the two or more weight information measured in previous turns, and the weight setting unit 150 may set extraction weight information by calculating an average value of two or more the individual extraction weight information.

For example, when order information includes latte, ratio information determined for the latte includes 60 mL of espresso, 150 mL of milk, and 5 mL of syrup, weight information of the ingredients extracted in previous turns includes 70 g of espresso and 150 g of milk, and an ingredient to be immediately extracted is the syrup, the weight setting unit 150 may set individual extraction weight information of the syrup for the espresso to 5.83 g and set individual extraction weight information of the syrup for the milk to 5 g.

In this case, the weight setting unit 150 may set extraction weight information of the syrup for the espresso and the milk which are extracted in previous turns to 5.42 g.

In this regard, when weight factors are set for a plurality of ingredients, the weight setting unit 150 may set extraction weight information by applying the weight factors to two or more individual extraction weight information.

In this case, the weight setting unit 150 may set individual extraction weight information of an ingredient to be immediately extracted for an ingredient of which a weight factor is highest among ingredients extracted in previous turns as extraction weight information of the corresponding ingredient. In one embodiment, when order information includes latte, and weight factors set for espresso and milk which are ingredients extracted in previous turns are 3 and 2, respectively, the weight setting unit 150 may set individual extraction weight information of syrup for the espresso as extraction weight information.

Alternatively, the weight setting unit 150 may set extraction weight information by calculating a ratio between weight factors set for two or more ingredients extracted in previous turns and adding two or more individual extraction weight information measured in the previous turns according to the calculated ratio. In one embodiment, when order information includes latte, and weight factors set for espresso and milk which are ingredients extracted in previous turns are 3 and 2, respectively, the weight setting unit 150 may set extraction weight information of syrup for the espresso and the milk by multiplying individual extraction weight information of the syrup for espresso by 3/5, multiplying individual extraction weight information of the syrup for the milk by 2/5, and adding the two individual extraction weight information to which a ratio of the weight factors is applied.

Meanwhile, when there are one or more ingredients to be extracted in turns later than that of one ingredient to be immediately extracted in an order according to order information, the weight setting unit 150 may generate one or more estimated extraction weight information by calculating extraction weight information of one or more ingredients to be extracted in the later turns from one or more weight information measured in previous turns, the weight setting unit 150 may further generate individual extraction weight information of the one ingredient to be immediately extracted from the one or more estimated extraction weight information, and the weight setting unit 150 may set extraction weight information by calculating an average value of the plurality of individual extraction weight information.

In this case, an ingredient to be extracted in a later turn may be an ingredient to be extracted in a turn later than that of an ingredient to be immediately extracted by the gripper 200 according to a preset order set to prepare any one drink according to order information.

In other words, based on a turn of an ingredient to be immediately extracted at an arbitrary timepoint, the term "later turn" may be a turn of an ingredient to be extracted later than the corresponding ingredient.

In this case, in any one ingredient among one or more ingredients to be extracted in later turns, the weight setting unit 150 may calculate one or more individual extraction weight information for any one ingredient extracted in the later turn according to one or more weight information measured in previous turns, and the weight setting unit 150 may generate estimated extraction weight information by calculating an average value of one or more individual extraction weight information for any one ingredient.

For example, when order information includes latte, and weight information of espresso extracted in a previous turn is measured as 50 g, the weight setting unit 150 may set individual extraction weight information of milk to be immediately extracted to 125 g according to ratio information indicating a ratio of 60 to 150 and set individual extraction weight information of syrup to be extracted in a later turn to 4.17 g. In this case, the weight setting unit 150 may set 4.17 g which is an average value of the individual extraction weight information of the syrup to be extracted in the later turn as estimated extraction weight information of the syrup.

Accordingly, the weight setting unit 150 may set individual extraction weight information of the milk for the syrup to be extracted in the later turn to 125.1 g according to a ratio of 150 to 5, and the weight setting unit 150 may set 125.05 g which is an average value of 125 g and 125.1 g which are the individual extraction weight information of the milk as extraction weight information.

In this regard, when weight factors are set for a plurality of ingredients, the weight setting unit 150 may apply the weight factors to a plurality of individual extraction weight information and set extraction weight information.

In this case, the weight setting unit 150 may set individual extraction weight information according to an ingredient with highest importance among individual extraction weight information according to an ingredient extracted in a previous turn and individual extraction weight information of an ingredient to be extracted in a later turn as extraction weight information of an ingredient to be immediately extracted. Alternatively, the weight setting unit 150 may also set extraction weight information by calculating a ratio between a weight factor of an ingredient extracted in a previous turn and a weight factor of an ingredient to be extracted in a later turn and adding individual extraction weight information according to the ingredient extracted in the previous turn and individual extraction weight information according to the ingredient to be extracted in the later turn according to the calculated ratio.

In this case, the weight setting unit 150 may also calculate estimated extraction weight information by applying a weight factor of an ingredient extracted in a previous turn to individual extraction weight information of one or more ingredients to be extracted in later turns.

FIG. 3 is a block diagram illustrating a process in which the ratio determination unit of FIG. 2 determines ratio information.

Referring to FIG. 3, the communication unit 120 may receive order information on an order ordered by the customer from the server 300.

Accordingly, the ratio determination unit 130 may determine a plurality of ingredients required according to the order information, and the ratio determination unit 130 may determine ratio information between the plurality of ingredients on the basis of the order information.

To this end, the storage unit (not shown) may store information on the plurality of ingredients to match a drink included in the order information. In this case, the storage unit (not shown) may store ratio information indicating a ratio between the plurality of ingredients matching the drink.

Accordingly, the ratio determination unit 130 may extract the plurality of ingredients matching the order information, and the ratio determination unit 130 may determine ratio information between the extracted plurality of ingredients.

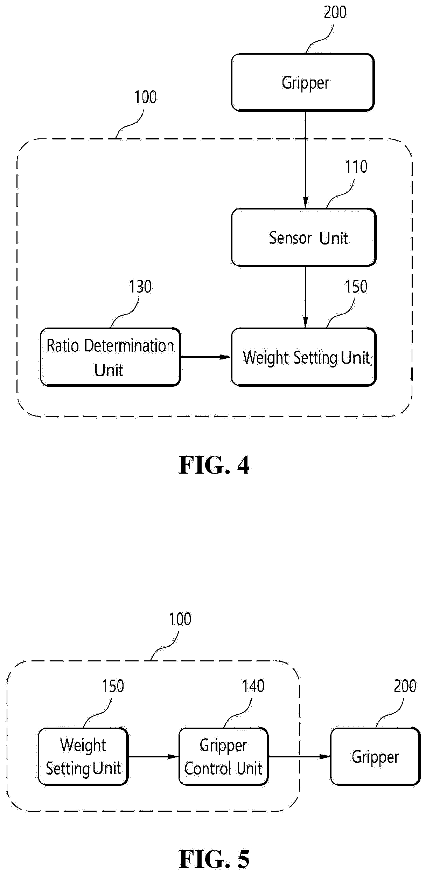

FIG. 4 is a block diagram illustrating a process in which the weight setting unit of FIG. 2 sets extraction weight information.

Referring to FIG. 4, the sensor unit 110 may be attached to the gripper 200 and measure weight information of an ingredient extracted by the gripper 200, the ratio determination unit 130 may determine a plurality of ingredients required according to order information, and the ratio determination unit 130 may determine ratio information between the plurality of ingredients on the basis of the order information.

Accordingly, the weight setting unit 150 may obtain weight information of one or more ingredients extracted in previous turns, the weight setting unit 150 may determine an ingredient to be extracted later on the basis of an order according to order information, and the weight setting unit 150 may calculate extraction weight information of the ingredient to be extracted from the weight information obtained on the basis of ratio information.

FIG. 5 is a block diagram illustrating a process in which the gripper control unit of FIG. 2 controls the gripper.

Referring to FIG. 5, the weight setting unit 150 may obtain weight information of one or more ingredients extracted in previous turns, the weight setting unit 150 may determine an ingredient to be extracted later on the basis of an order according to order information, and the weight setting unit 150 may calculate extraction weight information of the ingredient to be extracted from weight information obtained on the basis of ratio information.

Accordingly, the gripper control unit 140 may control the gripper 200 to extract a plurality of ingredients according to a preset order according to order information, and the gripper control unit 140 may control the gripper 200 to extract an ingredient according to extraction weight information preset for the ingredient to be extracted.

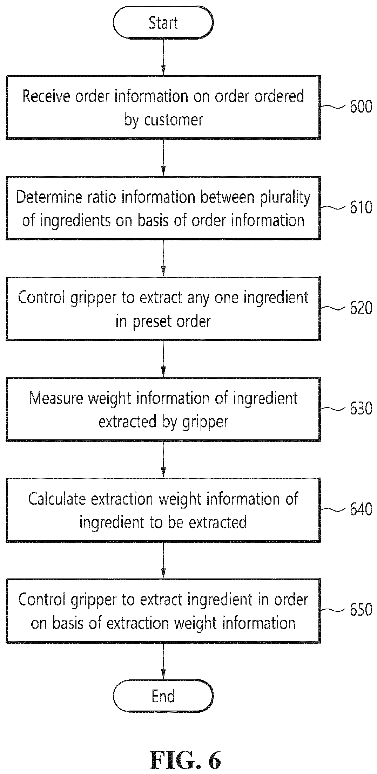

FIG. 6 is a flowchart of an ingredient extraction method according to one embodiment of the present invention.

Since the ingredient extraction method according to one embodiment of the present invention is performed on the same configuration as the ingredient extraction device 100 illustrated in FIG. 1, the same reference numerals as those of the ingredient extraction device 100 of FIG. 1 are assigned to the same components, and repeated description will be omitted.

An ingredient extraction method may include receiving order information on an order ordered by the customer (600), determining ratio information between a plurality of ingredients on the basis of the order information (610), controlling the gripper to extract any one ingredient according to a preset order (620), measuring weight information of the ingredient extracted by the gripper (630), calculating extraction weight information of an ingredient to be extracted (640), and controlling the gripper to extract the ingredient in the order on the basis of the extraction weight information (650).

The operation 600 of receiving the order information on the order ordered by the customer may include receiving, by the communication unit 120, the order information on the order ordered by the customer from the server 300.

The operation 610 of determining the ratio information between the plurality of ingredients on the basis of the order information may include determining, by the ratio determination unit 130, the plurality of ingredients required according to the order information and determining the ratio information between the plurality of ingredients on the basis of the order information.

The operation 620 of controlling the gripper to extract any one ingredient according to the preset order may include controlling, by the gripper control unit 140, the gripper 200 to extract any one ingredient according to the preset order according to the order information.

In this case, the operation 620 of controlling the gripper to extract any one ingredient according to the preset order may include controlling the gripper 200 to extract the ingredient set to a first turn in the order according to the order information.

The operation 630 of measuring the weight information of the ingredient extracted by the gripper may include measuring, by the sensor unit 110 attached to the gripper 200, the weight information of the ingredient extracted by the gripper 200.

The operation 640 of calculating the extraction weight information of the ingredient to be extracted may include obtaining, by the weight setting unit 150, weight information of one or more ingredients extracted in previous turns, determining an ingredient to be extracted later according to the order information, and calculating extraction weight information of the ingredient to be extracted from the weight information obtained on the basis of the ratio information.

The operation 650 of controlling the gripper to extract the ingredient extracted in the order on the basis of the extraction weight information may include controlling, by the gripper control unit 140, the gripper 200 to extract the ingredient extracted in the order on the basis of the extraction weight information.

According to one aspect of the present invention, an ingredient extraction device and an ingredient extraction method are provided to extract a plurality of ingredients so that a ratio of ingredients mixed in a drink can be maintained.

While the present invention has been described above with reference to the embodiments, it may be understood by those skilled in the art that various modifications and alterations may be made within ranges without departing from the spirit and scope of the present invention described in the appended claims.

## Claims

1. An ingredient extraction device for controlling a gripper provided to extract ingredients, the ingredient extraction device comprising:
a sensor unit connected to the gripper and configured to measure weight information of the ingredients extracted by the gripper;
a communication unit configured to receive from a server order information on an order ordered by a customer;
a ratio determination unit configured to determine a plurality of ingredients required according to the order information and to determine ratio information between the plurality of ingredients based on the order information;
a gripper control unit configured to control the gripper to extract the plurality of ingredients in a preset order according to the order information; and
a weight setting unit configured to obtain weight information of one or more ingredients extracted in previous turns, to determine an ingredient to be extracted on one or more next turns based on the preset order according to the order information, and to calculate extraction weight information of the ingredient to be extracted from the weight information obtained based on the ratio information.

2. The ingredient extraction device of claim 1, wherein, when two or more ingredients are completely extracted and two or more weight information are measured in the previous turns, the weight setting unit is further configured to:
generate two or more individual extraction weight information by calculating extraction weight information of the ingredient to be extracted according to the two or more weight information measured in the previous turns; and
set the extraction weight information of the ingredient to be extracted by calculating an average value of the two or more individual extraction weight information.

3. The ingredient extraction device of claim 2, wherein, when weight factors are set for the plurality of ingredients, the weight setting unit is further configured to set the extraction weight information of the ingredient to be extracted by applying the weight factors to the two or more individual extraction weight information.

4. The ingredient extraction device of claim 1, wherein, when there are one or more ingredients to be extracted in turns later than that of an ingredient to be immediately extracted in the preset order according to the order information, the weight setting unit is further configured to:
generate one or more estimated extraction weight information by calculating extraction weight information of the one or more ingredients to be extracted in the later turns from the weight information of the one or more ingredients extracted in the previous turns;
further generate one or more individual extraction weight information of the ingredient to be immediately extracted from the one or more estimated extraction weight information; and
set the extraction weight information of the ingredient to be immediately extracted by calculating an average value of the one or more individual extraction weight information.

5. The ingredient extraction device of claim 4, wherein, for one ingredient among the one or more ingredients to be extracted in the later turns, the weight setting unit generates an estimated extraction weight information for the one ingredient among the one or more ingredients to be extracted in the later turns by calculating one or more individual extraction weight information therefor according to the one or more weight information measured in the previous turn and calculating an average value of the one or more individual extraction weight information for the one ingredient.

6. The ingredient extraction device of claim 4, wherein, when weight factors are set for the plurality of ingredients, the weight setting unit is further configured to set the extraction weight information of the ingredient to be immediately extracted by applying the weight factors to the one or more individual extraction weight information.

7. An ingredient extraction method of an ingredient extraction device for controlling a gripper provided to extract ingredients, the ingredient extraction method comprising:
receiving, by a communication unit from a server, order information on an order ordered by a customer;
determining, by a ratio determination unit, a plurality of ingredients required according to the order information and determining ratio information between the plurality of ingredients based on the order information;
controlling, by a gripper control unit, the gripper to extract one of the plurality of ingredients in a preset order according to the order information;
measuring, by a sensor unit connected to the gripper, weight information of the ingredients extracted by the gripper;
obtaining, by a weight setting unit, weight information of one or more ingredients extracted in previous turns, determining an ingredient to be extracted on one or more next turns based on the preset order according to the order information, and calculating extraction weight information of the ingredient to be extracted from the weight information obtained based on the ratio information; and
controlling, by the gripper control unit, the gripper to extract the ingredient to be extracted in the preset order based on the extraction weight information.

8. The ingredient extraction method of claim 7, wherein the calculating the extraction weight information of the ingredient to be extracted comprises: when two or more ingredients are completely extracted and two or more weight information are measured in the previous turns,
generating two or more individual extraction weight information by calculating extraction weight information of the ingredient to be extracted according to two or more weight information measured in the previous turns; and
setting the extraction weight information of the ingredient to be extracted by calculating an average value of the two or more individual extraction weight information.

9. The ingredient extraction method of claim 8, wherein the calculating the extraction weight information of the ingredient to be extracted comprises: when weight factors are set for the plurality of ingredients, setting the extraction weight information of the ingredient to be extracted by applying the weight factors to the two or more individual extraction weight information.

10. The ingredient extraction method of claim 7, wherein the calculating the extraction weight information of the ingredient to be extracted comprises: when there are one or more ingredients to be extracted in turns later than that of an ingredient to be immediately extracted in the preset order according to the order information,
generating one or more estimated extraction weight information by calculating extraction weight information of the one or more ingredients to be extracted in the later turns from the weight information of the one or more ingredients extracted in the previous turns;
further generating one or more individual extraction weight information of the ingredient to be immediately extracted from the one or more estimated extraction weight information; and
setting the extraction weight information of the ingredient to be immediately extracted by calculating an average of the one or more individual extraction weight information.

11. The ingredient extraction method of claim 10, wherein the calculating the extraction weight information of the ingredient to be extracted comprises: for one ingredient among the one or more ingredients to be extracted in the later turns, generating an estimated extraction weight information for the one ingredient among the one or more ingredients to be extracted in the later turns by calculating one or more individual extraction weight information therefor according to the one or more weight information measured in the previous turns and calculating an average value of one or more individual extraction weight information for the one ingredient.

12. The ingredient extraction method of claim 10, wherein the calculating the extraction weight information of the ingredient to be extracted comprises: when weight factors are set for the plurality of ingredients, setting the extraction weight information of the ingredient to be immediately extracted by applying the weight factors to the one or more individual extraction weight information.
